# EUROPEAN PATENT APPLICATION

(11) **EP 0 859 143 A1**
(43) Date of publication of application: **19.08.1998**
(21) Application number: 98102101.7
(22) Date of filing: 06.02.1998
(51) Int. Cl.: F02K 9/50

(54) **Single stage regulated bootstrap pressurization system**

(30) Priority: 12.02.1997 US 799182
(71) Applicant: Primex Technologies, Inc., St. Petersburg, FL 33716-3807 (US)
(72) Inventor: Maybee, Jeffrey C., Issaquah, Washington 98029 (US)
(74) Representative: Klunker . Schmitt-Nilson . Hirsch

(57) **Abstract**

A single stage monopropellant pressurization system (80) wherein a monopropellant (36) is stored within a tank 14 equipped with a pressure amplification device (32). A gas generator (18) supplied by the tank (14) generates warm gas (58) to pressurize other tanks (112), (114). A small portion of the gas is used to drive the pressure amplification device (32) within the tank (14). A liquid regulator (82) at the tank (14) outlet (89) provides the pressure reference for the system (80).

## Description

This invention relates to systems for providing pressurization. More particularly, this invention relates to providing a source of a warm gas for pressurizing other tanks.

A typical aerospace propulsion system must deliver high pressure liquid propellants to a combustion chamber. Aerospace propulsion pressurization systems provide the liquid propellants to the combustion chamber at the required high pressure. Typically, these pressurization systems constitute a significant portion of the weight and cost of the propulsion system.

A variety of cold gas pressurization schemes exist. These cold gas systems store an ambient temperature gas in a pressurized tank which is typically regulated to some lower pressure for use in other tanks, or the cold gas system operates in a blowdown mode with the pressurant gas stored in the working tank itself.

In attempts to minimize weight and volume, one and two stage warm gas systems exist which generate warm gases for pressurization. These systems include blowdown and regulated operation. In the regulated operation, a pressure switch coupled to an electronic flow control valve regulates the pressure.

These warm gas systems require active control by pressure switches and control valves which require external power or require storing cold gas in one or more of the tank stages. Many aerospace applications place restrictions and limitations on the amount of available electronic power and may not have sufficient power to drive the control valves or excite the pressure switches, or the design of a system having sufficient power would unacceptably impact the overall vehicle design.

These power-limited applications require passive control for the pressurization system, i.e. the pressurization system must be completely self-sufficient and require no external power or logic controls, with the exception of an initiating signal. Aerospace applications attempting to reduce weight and volume, while obtaining passive control without pre-pressurized tanks, compromise certain design features.

An alternate regulation scheme utilizes a liquid control valve with an external warm gas feedback loop downstream of the gas generator. While this design is passive, the control valve responds relatively slowly due to the nature of the pneumatic feedback loop. This slow response time causes variability in downstream pressure of the working tanks from the time lag in responding to downstream pressure losses during demand, as well as pressure rises due to cessation of demand. Furthermore, a pneumatic regulator natural frequency near the natural frequency of the feed system may cause undesirable feed system coupling whereby downstream pressure oscillations would become coupled with the upstream feed system and might cause large and potentially catastrophic excursions. Proper design of the regulator spring constant and mass, or by increasing the pressure loss through the gas generator may help to avoid coupled oscillations.

Increasing the pressure loss through the gas generator results in a higher boost ratio on the pressure amplified tank and thus heavier weight and higher volume. The warm gas line connection to the regulator additionally complicates the overall system design as well as the regulator design, due to thermal heating of the regulator (both convective and conductive), the necessity for warm gas seals within the regulator and potential for leakage both external and into the propellant, the potential for overheating of liquid fuel within the regulator, and the added gas line which routes the warm gas to the regulator.

What is needed is a pressurizing system that is light-weight, reliable, and operates without active control or external power sources, but does not suffer from the problems found in the related art.

Accordingly, the present invention is directed to a pressurizing system and method of using that system that substantially obviates one or more of the problems due to limitations and disadvantages of the related art.

In accordance with the purpose of the invention, as embodied and broadly described, the pressurizing system according to the present invention includes a first gas source connected to a pressure amplifier connected to the gas source. A liquid propellant source is connected between the pressure amplifier and a liquid regulator. A gas generator is connected to the liquid regulator for converting the liquid propellant to a second gas.

Further in accordance with the invention, the invention includes a first conduit connected between the liquid regulator and the gas generator for feeding back a portion of the liquid propellant to the liquid regulator.

Further in accordance with the invention, a method for supplying a gas to a load includes providing and amplifying an initial pressure and using the amplified pressure to force a liquid propellant from a source. The flow of the liquid propellant is regulated from the source to the gas generator where the liquid propellant is reduced to a gas.

Further in accordance with the invention the regulation of the flow includes altering the flow of the liquid propellant to the gas generator based on a pressure of the liquid propellant entering the gas generator.

It is to be understood that both the foregoing general description and the following detailed description are exemplary and explanatory and are intended to provide further explanation of the invention as claimed.

The accompanying drawings are included to provide a further understanding of the invention and are incorporated in and constitute a part of this specification, illustrate several embodiments of the invention and together with the description, serve to explain the principles of the invention.

In the drawings,
Fig. 1 illustrates a typical hot gas generator system of an aeropropulsion pressurizing system as known in the prior art; and
Fig. 2 illustrates the pressurizing system according to the present invention.

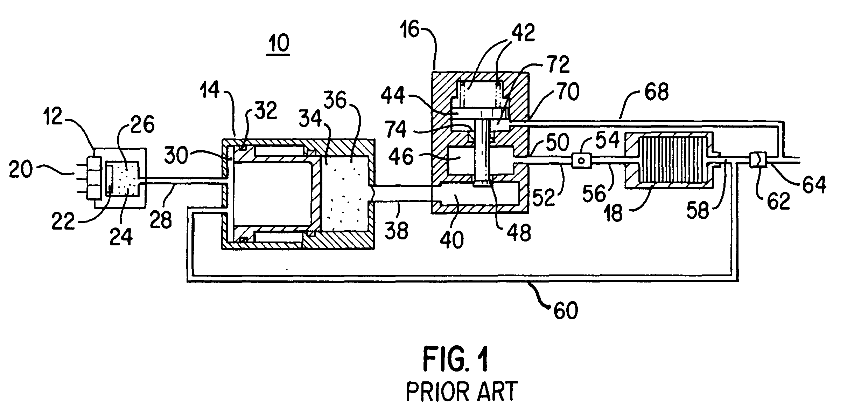

Fig. 1 illustrates a typical hot gas generator system 10 of an aeropropulsion pressurizing system. The system 10 includes an igniter 12, a fuel tank 14, a pressure controller 16, and a gas generator 18.

A start signal 20 to the igniter 12 ignites a solid propellant start cartridge 22 which might be an electrically initiated unit which utilizes an ammonium-nitrate base propellant. The gas 24 generated from the solid propellant start cartridge 22 expands into a starter cavity 26 and through a gas conduit 28 and into a amplifier cavity 30. The gas 24 pushes against a piston 32 which pushes against a liquid fuel 34 in a propellant cavity 36. Liquid fuel 34 may be hydrazine, monomethyl hydrazine, or any combination thereof, or other monopropropellants.

The amplifier cavity 30 has a larger bore size than propellant cavity 36 and the piston 32 provides the gas 24 a pressure advantage over the liquid fuel 34 so that the fuel 34 exits the fuel tank 12 with a pressure higher than that supplied by the gas 24.

The fuel 34 exits the fuel tank 14 and enters the pressure regulator 16 via a regulator input conduit 38 to a lower cavity 40. A set of springs 42 initially bias a piston 44 so that the fuel 34 from the lower cavity 40 enters an upper cavity 46 through an opening 48. The liquid fuel 34 exits the upper cavity 46 through an exit port 50 into an exit conduit 52. A check valve 54 connects the exit conduit 52 with a generator input conduit 56. Generator input conduit 56 directs the liquid fuel 34 to gas generator 18 where the liquid fuel 34 decomposes into a gas 58.

A portion of the gas 58 travels through an amplifier boost conduit 60 to the amplifier cavity 30, supplementing the pressure applied from gas 24 to piston 32. A valve 62 is connected between the amplifier boost conduit 60 and a gas output conduit 64. Gas output conduit 64 contains the gas 58 and may be connected to various loads requiring the high pressure gas 58 including various downstream tanks.

A feedback conduit 68 connects to the gas output conduit 64 and allows a portion of the gas 58 to flow into pressure controller 16 through a feedback opening 70 into a feedback cavity 72. A seal 74 between the feedback cavity 72 and the upper cavity 46 prevents the gas 58 from passing into the upper cavity 46. When the gas 58 enters the feedback cavity 72 with sufficient pressure, the gas 58 causes the piston 44 to move against the springs 42 to close the opening 48 which decreases the flow of the fuel 34 to the gas generator 18. The gas 58 feedback provides a limiting pressure on the gas 58. When the pressure of the gas 58 decreases from the reduced fuel flow, the piston 44 moves under the control of the springs 42 and allows the fuel 34 to flow from the lower cavity 40 to the upper cavity 46.

To decrease weight and volume of the system 10, requires reducing the pressure amplification ratio (or boost ratio). For a fixed volume of fuel 34 to be displaced from the fuel tank 14, minimizing the gas 58 volume will reduce the fuel tank 14's size and weight. The gas 58 volume is essentially the liquid fuel 34 s volume multiplied by the boost ratio. Reduced parasitic losses through such effects as fluid resistances through components and frictional forces on the pressure amplifier help reduce the required boost ratio. The overall pressure tolerance specified for the aeropropulsion system further affects the system weight based on the component sizes.

Recent advances in liquid regulators have resulted in units which are lightweight, reliable, and operate entirely on liquid with a self-contained hydraulic feedback loop.

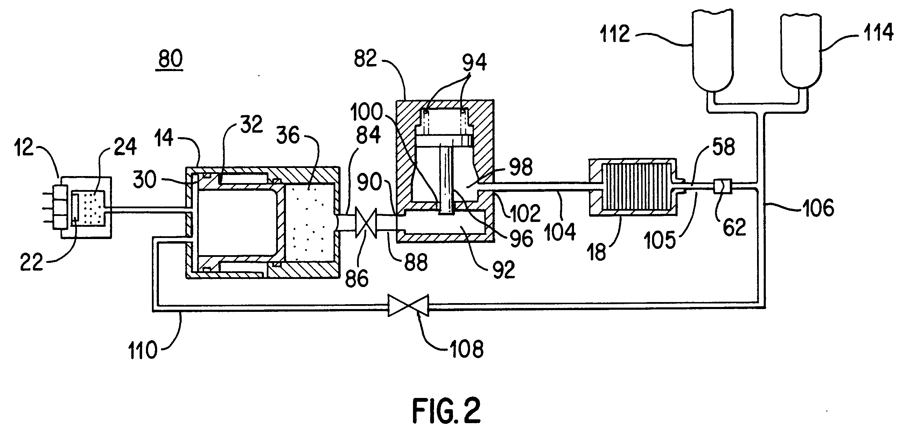

Reference will now be made in detail to the present preferred embodiments of the invention, an example of which is illustrated in Fig. 2 where like or similar parts to Fig. 1 are identified by the same reference characters.

Fig. 2 illustrates a single stage regulated pressure system 80 according to the present invention. The system 80 includes the igniter 12, the fuel tank 14, a liquid regulator 82, and the gas generator 18. The igniter 12, the fuel tank 14, and gas generator 18 operate as described above.

A fuel tank output conduit 84 connects the fuel tank 14 to a valve 86 and a regulator input conduit 88 connects the valve 86 to the liquid regulator 82. The valve 86, such as a burst valve, allows the pressurized fuel to enter regulator input conduit 88.

As with system 10, the start signal 20 to the igniter 12 ignites the solid propellant start cartridge 22. A preferred type of solid propellant start cartridge would be an electrically initiated unit which utilizes an ammonium-nitrate base propellant. The gas 24 created from the ignition of the solid propellant start cartridge expands into the amplifier cavity 30 pushing against the piston 32 which amplifies the pressure of gas 24 and forces the fuel 34 out of propellant cavity 36 into the fuel tank output conduit 84. As with the description associated with Fig. 1, the fuel 34 may be hydrazine, monomethyl hydrazine, or any combination thereof, or other monopropropellants. One preferred fuel 34 is a mixture of 75% monomethyl hydrazine and 25% hydrazine, also called M-75, or other monopropellant.

The fuel 34 enters the liquid regulator 82 from the regulator input conduit 88 at an entrance port 90 and enters a lower cavity 92. A set of springs 94 initially bias a piston 96 so that the fuel 34 from the lower cavity 92 enters an upper cavity 98 through an opening 100. The springs 94 and piston 96 may be any sufficiently durable material such as corrosion resistant steel alloy CRES 304. The fuel 34 exits the upper cavity 98 through an exit port 102 into a liquid output conduit 104 that directs the fuel 34 to the gas generator 18 where the fuel 34 decomposes into a gas 58 which enters a gas conduit 105. The valve 62, such as a burst valve, separates and connects the gas conduit 105 and a gas use conduit 106.

A portion of the gas 58 travels through the gas use conduit 106 to a valve 108, and through an amplifier conduit 110 to the amplifier cavity 30, supplementing the pressure applied from gas 24 to piston 32. The valve 108 also serves to isolate the gasses produced from solid propellant start cartridge 22 from the other components of the system and is preferably implemented as a directional burst disk or check valve, or any other type of valve designed to prevent gasses from the solid propellant start cartridge 22 from entering conduit 106.

The gas use conduit 106 also allows the gas 58 to travel to loads, by way of example, the vessels 112 and 114. The vessel 112 may contain a propellant such as hydrazine or kerosene and the vessel 114 may contain an oxidizer. Alternatively preferred, the gas use conduit 106 may be connected to a monopropellant vessel or vessels, or other vessels or components requiring a pressurized gas.

The pressure feedback of this system is accomplished by directly exposing the piston 96 to the fluid in the upper cavity 98 just before it exits the regulator 82 through the exit port 102. When the fuel 34 within the upper cavity 98 reaches a sufficient pressure such as 7.34 MPa(1065 psia), the pressure of the fuel 34 causes the piston 96 to move against the springs 94 to close the opening 100 and thus decrease the flow of the fuel 34 to the gas generator 18. When the pressure of the fuel 34 decreases from the reduced fuel flow, the piston 96 moves under the control of the springs 94 and allows the fuel 34 to flow from the lower cavity 92 to the upper cavity 98 again.

The system 80, according to the present invention, as illustrated by way of example in Fig. 2 eliminates the need for an active control, an external power source, or pre-pressurized tanks prior to operation. It provides weight and volume advantages compared to previous one or two stage systems, provides higher reliability and safety over pre-pressurized systems, and additionally provides cost advantages due to elimination of components.

In comparison to system 10 illustrated in Fig. 1, the system 80 provides numerous advantages. The liquid regulator 82 respond to changes more quickly than the pressure controller 16 because the liquid fuel 34 is less compressible than the gas 58, the liquid fuel 34 has a higher density than and has lower pressure losses associated it than the gas 58. Because of the faster response time of the liquid regulator 82, pressure variations in the downstream working tanks are reduced. The longer inherent lag time of a pneumatic feedback loop, as in the pressure controller 16, results in greater undershoot during high demand as well as greater pressure overshoot following cessation of demand compared to the close-coupled hydraulic feedback loop present in the liquid regulator 82. Because the liquid regulator 82 does not use the gas 58 generated from the gas generator 18, it does not require a seal 74 between the gas in the cavity feedback 72 and the liquid in the upper cavity 46, as in the pressure controller 16. The need for the separate feedback cavity 72 is also eliminated entirely, lending a simpler design of the liquid regulator 82. This also eliminates any potential for gas 58 leakage out of the liquid regulator 82 into the propellant and any thermal heating of the liquid regulator 82 and/or fuel 34.

Additionally, the warm gas 58 feedback in the pressure controller 16 adds a pressure drop which results in a lower pressure within the feedback cavity 72 requiring a larger sensing diaphragm/area within the pressure controller 16 above feedback cavity 72 for equivalent outlet pressure. The hydraulic design of the liquid regulator 82 does not suffer this pressure drop and subsequently results in a smaller overall design as compared to the pressure controller 16. Furthermore, the liquid regulator 82 eliminates the need of the gas 58 feedback line and/or plumbing resulting in a simpler mechanical design, reduced part count, reduced possibility of gas leakage. All of these factors contribute to a lower overall cost for the system 80. Finally, the higher natural frequency of the hydraulic design in liquid regulator 80 significantly reduces the possibility of feed system coupling present in the pressure controller 16.

Table 1 provides an exemplary system 80 according to the present invention. The values in Table 1 are for illustration purposes and are in no way intended to limit the scope of the invention.

**TABLE 1**

| WARM GAS PRESSURIZATION SYSTEM SIZING | | | | | |
|---|---|---|---|---|---|
| Component | Quantity | Weight(ea.) | | Total Weight | |
| | | kg | (pounds) | kg | (pounds) |
| Gas Generator | 1 | 0.32 | 0.70 | 0.32 | 0.70 |
| Pressure Amplified Tank | 1 | 0.27 | 0.60 | 0.27 | 0.60 |
| Start Cartridge | 1 | 0.05 | 0.12 | 0.05 | 0.12 |
| Liquid Regulator | 1 | 0.14 | 0.30 | 0.14 | 0.30 |
| Fittings/Burst Discs | | 0.10 | 0.22 | 0.10 | 0.22 |
| Mounting Structure | 1 | 0.18 | 0.40 | 0.18 | 0.40 |
| Total Dry Weight | | | | 1.06 | 2.34 |
| Propellant | | | | 0.18 | 0.40 |
| Total System Weight | | | | 1.24 | 2.74 |

### Assumptions:

Maximum volumetric demand = 1.64 x 10⁻³ M³/s(100 in³/sec)
Propellant density = 0.87 gm/cm³(.0315 pounds/in³⁾ (for a mixture of 75% monomethyl hydrazine and 25% hydrazine)
Burst Factor = 1.5 on tank (.i.e., meaning burst occurs at a minimum pressure of 1.5 times the working pressure of the tank)
Displaced Volume = 4.92 x 10⁻³ m³ (300 in³⁾
Initial Gas ullage = 8.2 x 10⁻⁴ m³ (50 in³)
Working tank pressure = 6.9 MPa (1000 psia) ± 10%

The fuel 34 required to pressurize the working tanks is calculated from the required operating pressure and the total volume to be displaced which includes the initial ullages in the system. The boost ratio is calculated from the expected pressure losses through the regulator 82, gas generator 18, liquid and gas conduits and any frictional losses across the pressure amplifier in the fuel tank 14.

System design requires tradeoffs on boost ratio versus fluid resistances and other parasitic losses. For example, increasing the allowable fuel 34 and gas 58 resistances decreases the size and weight of the components such as conduits, burst disks, the gas generator 18, and the liquid regulator 82 but adversely affects boost ratio by requiring a higher boost ratio and thus larger gas 58 volume and pressure amplifier in fuel tank 14. Each potential application provides an optimization point for boost ratio versus allowable parasitic losses. High gas 58 volume/low flow applications benefit more from decreasing boost ratio, while low gas 58 volume/high flow applications benefit more by increasing allowable parasitic losses.

For an exemplary illustration of pressures within system 80, pressure tolerances and pressure levels for one exemplary set of working tanks to be pressurized were used to calculate the system pressures. For example, the pressure levels for sets of working tanks 112, 114 was 6.9 MPa (1000 psia) with pressure tolerances of plus or minus 10% of the pressure level. Fluid resistances were assigned to each component in order to determine the required boost ratio. For example, the gas generator 18 was assumed to have a pressure drop of 3.5 x 10⁵ Pa (50 psid), the gas line 106 to the working tanks 112, 114 of 1.0 x 10⁵ Pa (15 psid), the liquid regulator 82 of 10.5 x 10⁵ Pa (150 psid), and the fuel tank 14 of 3% loss of total due to friction. The solid propellant start cartridge was sized based on the minimum pressure required to initiate the system, for example, 14 x 10⁵ Pa(200 psia). Depending upon the allowable bootstrap time for the system, the start cartridge can be sized to provide low pressure or high pressure. A high output pressure requires a larger start cartridge but results in a shorter bootstrap time.

Based on the above assumptions, exemplary pressures were: 8.5 MPa (1240 psia) within the propellant cavity 36 for the fuel 34; 1.1 MPa (150 psia) drop through the liquid regulator 82; 7.3 MPa (1065 psia) in conduit AA between the liquid regulator 82 and the gas generator 18; 3.5 X 10⁵ Pa (50 psid) drop through the gas generator 18; 7.0 MPa (1015 psia) in gas use conduit 106; and 6.9 MPa (1000 psia) at the vessels 112 and 114.

The methods used to isolate the propellant and initiate flow are not limited to those shown illustrated and described above. For example, valves 86, 108, and 62 may not only be burst valves, but pyrotechnic or electric valves of various types. Also, the system 80 could be initiated by other methods than the igniter 12. For example, a low pressure charge of an inert gas could be contained in the gas-side of the fuel tank 14 with a pyrotechnic valve at the fuel tank 14's liquid outlet. Flow through the system 80 would be initiated by firing the pyro valve and allowing the fuel 34 to flow through the gas generator 18.

Additionally, the pressure amplification device within the fuel tank 14 need not be a differential piston 32 as illustrated. Other amplifier designs such as differential bellows could also be used. A differential bellows contains fuel in the internals of a collapsing bellow which has a larger diameter driving piston connected to it. The amplification device does not need to be completely contained within the fuel tank 14. Designs have been developed which use a different piston design that extrudes partially from the liquid end of the tank, minimizing the size of the tank body.

If used with a monopropellant, it may be hydrazine or monomethyl hydrazine or a combination of these fuels and possibly other additives such as water. The fuel 34 for the system 80 is typically selected based on expected temperature extremes (freezing point and boiling point), desired pressurization efficiency (minimization of condensable species), and available materials of construction.

The operable range for the system is broad, with a preferable minimum boost ratio being about greater than 1.0 to provide for parasitic pressure losses with no absolute upper bound. The preferred range is that which provides a compromise between the boost ratio required to overcome the parasitic losses and allowance for component pressure losses which are achievable or typical. The most preferred operating point is specific for each application, and results in a reduced overall system mass and volume based on a trade between the boost ratio and the design pressure losses or component fluid resistances.

## Claims

1. A single stage regulated pressure system 80 for generating a gas 58 characterized by:
a first gas source 24;
a pressure amplifier 32 connected to the gas source 24;
a liquid propellant source 36 connected to the pressure amplifier 32;
a liquid regulator 82 connected the liquid propellant source 36; and
a gas generator 18 connected to the liquid regulator 82 for converting the liquid propellant 32 to a second gas 58.

2. The system 80 of claim 1, further characterized in that a first conduit 104 is connected between the liquid regulator 82 and the gas generator 18 for feeding back a portion of the liquid propellant 36 to the liquid regulator 82.

3. The system 80 of either claim 1 or claim 2, further characterized in that a second conduit 110 connects the gas generator 18 and the pressure amplifier 32 for supplying a first portion of the second gas 58 to the pressure amplifier 32.

4. The system 80 of any one of claims 1 to 3, characterized in that the liquid propellant 36 is selected from the group consisting of hydrazine, monomethyl hydrazine, any combination thereof, and other monopropropellants.

5. The system 80 of claim 4, characterized in that the liquid propellant 36 is a mixture of 75% monomethyl hydrazine and 25% hydrazine.

6. The system 80 of any one of claims 1 to 5, characterized in that the pressure amplifier 32 includes a differential piston.

7. A method for supplying a gas 58 to a load 112, 114 characterized by the steps of:
providing an initial pressure;
amplifying the initial pressure;
forcing a liquid propellant 36 from a source 14 using the amplified pressure to a gas generator 18;
regulating 86 a flow of the liquid propellant 36 from the source 14 to the gas generator 18;
converting the liquid propellant 36 to a gas 58.

8. The method of 7 characterized in that the step of regulating 86 includes the substep of altering the flow of the liquid propellant 36 to the gas generator 18 based on a pressure of the liquid propellant 36 entering the gas generator 18.

9. The method of either claim 7 or claim 8, characterized in that the step of amplifying includes the substep of using a portion of the gas 58 in combination with the initial pressure to amplify the pressure.

10. The method of any one of claims 7 to 9, further characterized in that the liquid propellant 36 is selected from the group consisting of hydrazine, monomethyl hydrazine, any combination thereof, and other monopropropellants.

11. The method of claim 10, characterized in the liquid propellant is selected to be a mixture of 75% monomethyl hydrazine and 25% hydrazine.

12. The method of any one of claims 7 to 11, characterized in that the step of amplifying includes the substep of using a differential piston.
